(19) Europäisches Patentamt
European Patent Office
Office européen des brevets

(11) **EP 2 708 856 B1**

(12) **EUROPEAN PATENT SPECIFICATION**

(45) Date of publication and mention of the grant of the patent:
**16.12.2015 Bulletin 2015/51**

(21) Application number: **12785547.6**

(22) Date of filing: **09.05.2012**

(51) Int Cl.:
***G01D 5/353*** (2006.01)

(86) International application number:
**PCT/ES2012/070329**

(87) International publication number:
**WO 2012/156559 (22.11.2012 Gazette 2012/47)**

(54) **DEVICE AND METHOD FOR MEASURING THE DISTRIBUTION OF PHYSICAL QUANTITIES IN AN OPTICAL FIBRE**

VORRICHTUNG UND VERFAHREN ZUR MESSUNG DER VERTEILUNG PHYSIKALISCHER GRÖSSEN IN EINER GLASFASER

DISPOSITIF ET PROCÉDÉ POUR LA MESURE DE LA DISTRIBUTION DE GRANDEURS PHYSIQUES DANS UNE FIBRE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2011 ES 201130773**

(43) Date of publication of application:
**19.03.2014 Bulletin 2014/12**

(73) Proprietor: **Universidad Publica de Navarra 31006 Pamplona (ES)**

(72) Inventors:
• **ZORNOZA INDART, Ander**
  **E-31006 Navarra (ES)**
• **LOAYSSA LARA, Alayn**
  **E-31006 Navarra (ES)**
• **SAGÜES GARCÍA, Miguel**
  **E-31006 Navarra (ES)**

(74) Representative: **Illescas, Manuel et al Manuel Illescas y Asociados, S.L. (MIA) Principe de Vergara n° 197 Oficina 1°A 28002 Madrid (ES)**

(56) References cited:
| | |
|---|---|
| EP-A1- 0 907 073 | EP-A1- 1 562 028 |
| EP-A1- 2 246 685 | ES-A1- 2 357 388 |
| US-A- 4 997 277 | US-A1- 2005 213 869 |
| US-B2- 7 245 790 | |

• **LUMING LI ET AL.: 'Kilometers-Range Dark-Pulse Brillouin Optical Time Domain Analyzer with Centimeters Spatial Resolution' 2010 SYMPOSIUM ON PHOTONICS AND OPTOELECTRONICS (SOPO 2010), CHENGDU, CHINA. 2010, PISICATAWAY, NJ, USA, XP031704813**
• **YANG XING-HONG ET AL.: 'An ameliorative technique for distributed Brillouin-based fiber optics sensing' PHOTONICS AND OPTOELECTRONICS MEETINGS (POEM) 2008: FIBER OPTIC COMMUNICATION AND SENSORS vol. 7278, 2008, WUHAN, CHINA., XP055135671**

**Description**

**FIELD OF THE INVENTION**

This invention relates to distributed fiber optic sensors based on the stimulated Brillouin scattering non linear effect and, specifically, to sensors based on the Brillouin optical time-domain analysis method.

**BACKGROUND OF THE INVENTION**

Distributed Brillouin sensors based on the Brillouin optical time-domain analysis (BOTDA) technique have their fundamentals in the use of the non-linear effect of stimulated Brillouin scattering (SBS) in optical fiber, by which two optical waves counter-propagating in a section of optical fiber give rise to an acoustic wave that generates an energy transfer between one of the waves, so-called pump wave, to another wave, so-called Stokes wave. The result of this process is that the Stokes wave is amplified and the pump wave attenuated. This takes place as long as the optical frequency separation between the pump and Stokes waves equals the so-called Brillouin frequency shift (BFS) of the deployed optical fiber. In this way, the effect gives rise to the generation of a gain spectrum for waves that counter-propagate to the pump wave with a maximum at the optical frequency given by the subtraction between the optical frequency of the pump and the BFS. This spectrum, so-called Brillouin gain spectrum, has the shape of a Lorentz function and a linewidth of the order of some tens of megahertz, which is given by the so-called Brillouin linewidth and which is characteristic of each optical fiber type. A Brillouin loss spectrum with a similar shape and linewidth and analogue characteristics is simultaneously generated for waves that counter-propagate in opposite sense to the Stokes wave.

The application of BOTDA to the development of sensors takes advantage of the dependence of the BFS on the physical magnitudes experienced by the fiber, particularly temperature (T) and strain ($\varepsilon$). Concretely, it is found that the BFS has an approximately linear dependence on these parameters, which is given by $BFS = BFS_0 + C_T T + C_\varepsilon \varepsilon$, where $BFS_0$ is the BFS at a given reference temperature and without strain on the fiber, and $C_T$ and $C_\varepsilon$ are the temperature and strain dependence coefficients, respectively. Therefore, the temperature and strain experienced by the fiber can be found simply measuring the Brillouin gain spectrum and finding its maximum. In order to do this, a pump wave is introduced from one end of the fiber and an auxiliary probe wave, which acts as Stokes wave in the Brillouin interaction, from the other end. The procedure consists of measuring the gain experienced by the probe wave after crossing the fiber for different separations in optical frequency between the two waves. The Brillouin loss spectrum can be equally used by making the probe wave to act as pump wave in the Brillouin interaction. In this way, the mean temperature or strain experienced by the deployed section of fiber can be established.

The BOTDA technique additionally permits to perform a measurement of the distribution of the physical magnitudes along the optical fiber. To that end a pump wave pulse is generated before introducing it into one of the fiber ends. That pulsed wave counter-propagates along the optical fiber with a continuous-wave probe wave, which is introduced by the other end. Finally, the gain experienced by the probe wave crossing the fiber is measured as a function of time. The measured gain at a given time corresponds to the interaction between the pump pulse and the probe wave at a given position in the fiber. In this manner, it is possible to translate gain versus time to gain versus position using a classic reflectometric technique. This, combined with the sweep of the optical frequency separation between pump and probe waves, allows to measure the Brillouin gain spectrum at each location in the fiber and, from it, to find the BFS, and hence T and $\varepsilon$, at that location. The spatial resolution of the measurement is generally given by the temporal duration of the pump pulse, because it determines the section in which gain is generated by the interaction of the pump and probe waves. The BOTDA can also be implemented by the measurement of the Brillouin loss spectrum instead of the gain spectrum.

In addition to BOTDA sensors, there are other distributed Brillouin sensors such as sensors based on Brillouin optical time-domain reflectometry (BOTDR), which include the use of spontaneous Brillouin scattering, and those based on the Brillouin optical coherence-domain analysis (BOCTDA) technique, which use SBS effect, but deploying a different method to provide distributed measurements of BFS. For instance, Spanish patent application No ES2226001 describes a BOTDR-type sensor.

The general concept behind BOTDA technique is described in patent US4997277. After that, a number of enhancements have been proposed to the basic technique, for instance, regarding the use of special pulsed wave shapes. Thus, patent US 7245790 B2 describes a technique to enhance the resolution of BOTDA sensors based on the use of dark pulses. Patent US 7719666 B2 proposes a method to enhance the resolution based on the use of pump pulses with staircase shape. In addition, patent US 7227123 B2 describes another technique to enhance the resolution of BOTDA measurements based on the sequential transmission of two pulses with different durations. Another enhancement is that proposed in patent US7480460 B2, which describes a device using a comb-like probe wave to be able to measure simultaneously the Brillouin interaction for multiple separations of pump and Stokes waves and which provides a reduction of the measurement time to obtain dynamic measurements.

The document EP 2 246 685 A1 describes a device and a method for the measurement of the distribution of physical magnitudes along an optical fibre, involving an optical source configured for generating a pulsed pump optical signal and a probe optical signal comprising several spectral components separated in optical frequency, an optical fibre where the probe optical signal interacts with the pump optical signal, and a photoreceiver configured to receive the optical signal exiting from the fibre.

However, BOTDA devices on the market have important limitations that do not allow taking advantage of all the potential advantages of this technology. The main ones are: the reduced signal-to-noise ratio (SNR) of the measurements, the long measurement times that are necessary, or the nonlocal effects generated by the transfer of energy from the pump to the probe, which limit the measurement precision and the maximum spatial resolution that can be obtained. The present innovation contributes to solve directly or indirectly all those limitations, which provides a very significant enhancement in the performance of distributed sensors of the BOTDA type.

The detected signals in current BOTDA sensors have very small amplitude due to the reduced Brillouin gain that can be achieved in the small section of fiber in which the interaction between the pump pulse and the probe wave takes place. Therefore, in principle, the SNR of the measurements is small, which limits the precision in the measurement of the Brillouin gain spectrum and hence of the BFS. This makes it necessary to perform repetitive measurements and average the results in order to suppress noise and enhance the SNR. However, this leads to an increment in the measurement time that can become of the order of minutes in long sections of fibers, which limits the industrial applications of this type of sensors.

A possible solution to this problem would be to increase the optical power of the pump pulses in order to increase the Brillouin gain; however, there exists a limit in the maximum power that these pulses can have due to the onset of other non linear effects in optical fiber that distort the measurement. Another possibility is to increase the probe wave power in order to obtain an equivalent increment in the SNR of the received signal. However, this possibility is also limited by the onset of the so-called nonlocal effects, which are generated by the transfer of energy from the pump wave to the probe and which make the measurements performed at a particular location to depend on the conditions at other locations in the fiber. This introduces a systematic error in the measurements that leads to a reduction in the precision of the device.

As it has been explained before, the spatial resolution of the measurements is given by the temporal duration of the pump pulse; reducing that duration the spatial resolution is increased. However, as the pulse duration reduces below around 10ns, which equals a spatial resolution of around 1 m, the linewidth of the measured Brillouin spectrum starts to increase. This leads to a reduction in the precision of the determination of the BFS because it is given by the gain spectrum maximum, and finding this maximum in the presence of noise becomes increasingly difficult as the spectrum widens. Therefore, in conventional BOTDA, there exists a trade-off between spatial resolution and measurement precision.

The invention that is refered in this patent application allows increasing the SNR of the signal received in BOTDA sensors without the need for increased measurement time or for reducing the sensor precision due to the onset of nonlocal effects. Furthermore, this enhancement in the SNR of the detected signal allows to increase the precision in the BFS measurement for a given pulse duration. The aforementioned enhancements obtained by this invention are based on modifying the steps of the procedure to perform measurements that has been used in BOTDA hitherto and, specifically, it is focused on the modification of the procedure for signal detection, as it is described below in the description of the invention.

## BRIEF DESCRIPTION OF THE INVENTION

One object of the present invention is a device for the measurement of the distribution of physical magnitudes in an optical fiber comprising, at least:

- one optical source configured to generate at least one pulsed pump optical signal and at least one probe optical signal comprising at least two spectral components, being said spectral components separated in optical frequency;
- one optical fiber segment where the probe optical signal interacts with the pump optical signal;

and wherein said device further comprises:

- a photoreceiver configured to detect the output optical signal exiting from the fiber as a result of the generation of a radiofrequency electrical signal resulting from the beat, i.e., the periodic variation of the amplitude resulting from the combination of the spectral components contained in said optical signal exiting from the fiber;
- a demodulator configured to demodulate the radiofrequency electrical signal exiting from the receiver.

An increase in the SNR of the signal received in BOTDA sensor is thus achieved without the need of either increasing the measuring times or decreasing the sensor precision due to the onset of nonlocal effects, which further allows to substantially increase the precision in the BFS measurement for a given duration of the pulsed pump signal. Measuring the phase of the Brillouin spectrum is further achieved by the object of the invention, which is also a substantial improvement in BFS determination with regard to state of the art devices.

In a preferred embodiment of the device of the invention, the demodulator is a synchronous demodulator.

In another preferred embodiment, said demodulator comprises, at least, one or more of the following: an envelope detector, a phase modulation detector, a frequency modulated detector, a phase-locked loop.

In another embodiment of the invention, the probe optical signal generated by the optical source comprises three spectral components.

In another preferred embodiment of the invention, the optical source of the device comprises at least one narrowband optical source, at least one optical signal divisor, at least one optical modulator and at least one radiofrequency pulse generator.

In another embodiment of the invention, the optical source of the device comprises at least one optical single sideband modulator.

In another alternative embodiment of the invention, the optical source of the device comprises at least one optical phase modulator.

In still another embodiment of the invention, the optical source of the device comprises at least one optical double sideband modulator, with suppressed carrier.

In another embodiment of the invention, the optical source of the device comprises an optical amplifier configured to increase the optical power of the generated pump signal.

In another embodiment of the invention, the optical source of the device comprises an optical filter configured to remove optical noise and/or undesired optical spectral components.

In a further embodiment of the invention, the device comprises a data capture device configured to obtain data of the distribution of physical magnitudes measured in the optical fiber.

In another embodiment of the present invention, the device comprises a control device equipped with a combination of programmable hardware and/or software, said device being configured for synchronizing the measurement of physical magnitudes in the optical fiber, acting on the optical source, the polarization controller and the RF generator, and/or for processing the measurement data captured by the data capture device, for obtaining the measurement of the BFS and/or the physical magnitudes in the optical fiber.

Other object of the present invention is a method for measurement of the distribution of physical magnitudes in an optical fiber which comprises:

- introducing a pulsed pump optical signal from one end (entry end) of one optical fiber segment;
- introducing a probe optical signal from the other end of the optical fiber segment, said probe optical signal comprising at least two spectral components and being said spectral components separated in optical frequency;
- interaction in the optical fiber, by means of stimulated Brillouin scattering, of the pulsed pump optical signal with at least one of the spectral components of the probe optical signal for generating an output optical signal which contains said components;
- detecting in a photoreceiver the output optical signal to provide a radiofrequency signal, resulting from the beat of the spectral components of the output optical signal;
- demodulating the radiofrequency signal for obtaining the modulus and/or the phase of the signal at the frequency given by the difference in optical frequency of the spectral components of the output optical signal, and preferably demodulating synchronously; and
- processing the signal resulting from demodulating the radiofrequency signal for obtaining the distribution of the modulus and/or phase of the Brillouin interaction spectrum throughout the optical fiber, at an optical frequency determined by the optical frequency of the pulsed pump optical signal and the frequency of one of the spectral components of the probe optical signal.

In a preferred embodiment of the method of the invention, the stage corresponding to the demodulation of the radiofrequency signal comprises one or more of the following steps: demodulating with detection of the envelope of the radiofrequency signal; demodulating with detection of the frequency of the radiofrequency signal; and demodulating with detection of the phase of the radiofrequency signal.

In another preferred embodiment of the method of the invention, the stage corresponding to the demodulation comprises the use of a phase-locked loop.

In another preferred embodiment of the method of the invention, the stage corresponding to the introduction of the probe optical signal in the optical fiber or the stage corresponding to the detection in a photoreceiver of the output optical signal, comprises the use of a probe optical signal consisting in three spectral components, being said spectral components separated by a given optical frequency;

In another preferred embodiment of the method of the invention, the stages thereof are repeated for different optical frequency adjustments of the pulsed pump optical signal and/or one or more of the probe optical signal components, in order to obtain the distribution throughout the optical fiber of the modulus and/or phase of the Brillouin interaction at different optical frequencies.

In a preferred embodiment of the method of the invention, one or more stages of said method are performed using the device for measurement of the distribution of physical magnitudes in an optical fiber, disclosed herein.

Other features and advantages of the invention will became apparent from the following description and drawings enclosed herein.

**DESCRIPTION OF FIGURES**

Figure 1 shows the operation of the measurement device in the BOTDA type devices of the prior art.
Figure 2 shows the operation of the measurement device in the BOTDA device of the present invention.
Figure 3 shows a diagram of a preferred embodiment of the present invention.
Figure 4 shows a diagram of the optical source used in an embodiment of the present invention.

**DETAILED DESCRIPTION OF THE INVENTION**

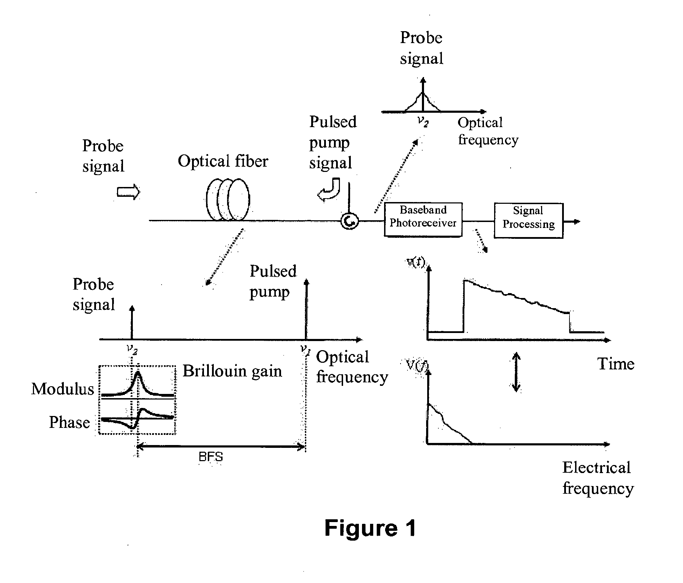

The conventional method of generation, detection and processing of signals used in BOTDA sensors used in the prior art is schematically shown in Figure 1.

In said method a pulsed wave of optical frequency $v_1$ and a continuous probe wave of optical frequency $v_2$, which are introduced from opposed ends of the fiber under test (FUT), are used. During the measurement procedure, it is necessary to modify the frequency separation between both optical waves $v_1$-$v_2$. These optical waves can be generated in multiple ways. One way consists in using two different laser sources, which can be tuned in wavelength and, therefore, in optical frequency. One of these lasers is pulsed using any kind of optical modulation element (electro-optic modulator, acousto-optic modulator, semiconductor amplifier, etc.) for providing the pulsed pump optical signal, while the other one is used in continuous operation, without being pulsed, as probe optical signal. Another option is using sideband generation techniques in which a single laser source with fixed wavelength, which is divided in two paths, is used. In one of them the laser source is pulsed using an optical modulator for generating the pump optical signal. In the other path a modulation is made, typically with a sinusoidal wave, in which an optical signal, composed of carrier and modulation sidebands, is generated. One of these sidebands is used as probe optical signal and at the exit from the fiber, before the signal detection, an optical filter is used for removing, from the received signal, the carrier and the remaining modulation sidebands. This method allows to easily tune the frequency separation $v_1$-$v_2$ simply by modifying the frequency of the sinusoidal signal used in the modulation without the need of being provided of laser sources of tunable wavelength.

In all these proposed BOTDA devices, already known in the state of the art, the detection and processing devices are similar. As shown in Figure 1, in the conventional method, an optical signal, which has a single spectral component which has experimented Brillouin interaction, finally reaches the optical receiver. The power of this probe wave is detected in a photoreceiver which has a "baseband" type response from frequencies close to zero and which has a bandwidth enough for detecting changes in the power of the probe wave received, as a function of time, as a consequence of variations in Brillouin spectrum at distances equal to the spectral resolution of the device. For example, if pulses of duration $\Delta t$ are used, a bandwidth of the receiver of at least $1/\Delta t$ is required for not deteriorating the spatial resolution (see, for example Y.D. Gong, Optics Communications, 272 (2007) 227-237). Regarding data processing, advantage is taken from classical reflectometric concepts which allow to convert the power of the probe wave, as a function of time, in gain experimented by this wave as a function of the position in the fiber. It is possible to measure the Brillouin gain spectrum for each position in the fiber by repeating this measurement while the frequency separation $v_1$-$v_2$ between the pump and probe optical signals is modified around the BFS. It is noted that with this method it is possible to measure the gain spectrum modulus, but not its associated phase.

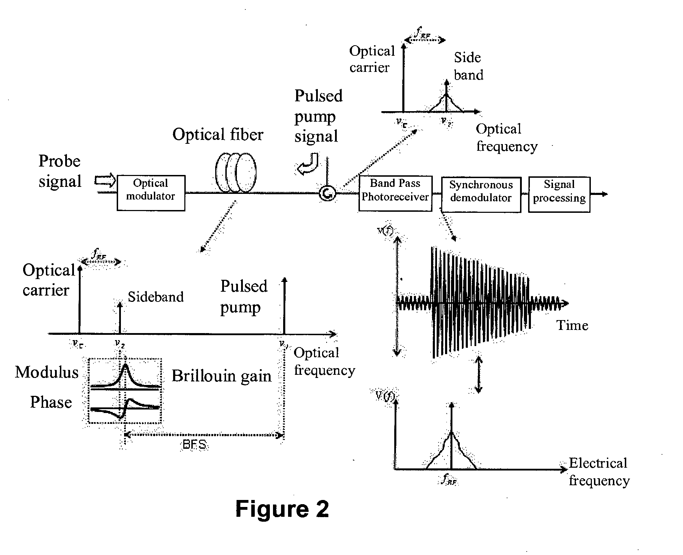

The device and method of the invention are based in an alternative method for the detection and processing of the probe optical signal, which substantially improves the performance of a BOTDA type sensor. Figure 2 schematically represents said detection and processing method. In it, a probe optical signal which contains at least two coherent spectral components, among which one experiments Brillouin interaction during its propagation through the optical fiber used in the measurement, is used. In figure 2, the case in which an optical signal with optical single sideband modulation (OSSB) is used, is shown as a non-limiting example of the invention, but it is possible to use other optical amplitude, or phase modulation formats, or any other method having two coherent spectral components such as, for example, an optical phase-locked loop. In the device and method of the present invention, these two spectral components contained in the probe signal, carrier signal, and sideband in the example considered, reach the photoreceiver without any intermediate optical signal filtering for detecting only the power of the spectral component which experiments the Brillouin interaction (sideband). However, in contrast to the state of the art, in the invention a self-heterodyne detection is performed, said detection being characterized in that the carrier and the sidebands, which have experimented the transfer function, generated by the SBS effect, are beaten in the photoreceiver for generating a radiofrequency (RF) electrical signal, whose frequency is the difference of frequencies between the sideband affected by the Brillouin interaction and the optical carrier. In addition, instead of baseband processing this signal, as it would be done conventionally, a demodulation of the radiofrequency signal is performed in order to find its modulus and phase. Said demodulation can preferably comprise one or more of the following: synchronous demodulation of the RF signal; demodulation with radiofrequency signal envelope detection; demodulation with RF signal phase detection; demodulation with RF signal frequency detection; and/or the use of a phased-locked loop.

As explained below, the use of self-heterodyne optical detection implies an improvement in the level of the signal detected for a given probe optical signal power and therefore an increase in the signal to noise ratio detected, compared with the one obtained in the case of the conventional direct detection of the probe optical signal. In addition, the subsequent processing of this RF signal allows to measure both the modulus, and contrary to the methods based on the prior art, the phase of the Brillouin gain spectrum, which allows to improve the precision of the BFS determination and, therefore, of the physical magnitude to be measured. A brief theoretical discussion, which justifies these arguments in more detail, is shown below:

In a conventional BOTDA, after its interaction with the pulsed Brillouin pump signal at a certain position $z$, the probe optical signal experiments an optical transfer function given by:

$$H(v, z) = exp\left(\frac{g_{max}}{1 + 2j(v - v_1 + BFS(z))/\Delta v_B}\right) = G_{SBS}(v, z)exp(j\varphi_{SBS}(v, z)),$$

where $g_{max}$ is the peak gain coefficient, $\Delta v_B$ is the Brillouin linewidth and $G_{SBS}$ and $\varphi_{SBS}$ are, respectively, the modulus and the phase component of the Brillouin gain spectrum. Thus, the expression of the optical field of the probe optical signal received in a conventional BOTDA is given by:

$$E_S(t) = E_{S0}G_{SBS}(v_2, z)exp(j2\pi v_2 t + \varphi_2 + \varphi_{SBS}(v_2, z)),$$

where $E_{S0}$ is the optical field received in the absence of Brillouin interaction and $\varphi_2$ is its phase. Position $z$ also includes a time dependency which is given by the pump optical signal propagation throughout the fiber. The optical power detected will be: $P_S(t) = P_{S0}G_{SBS}^2(v_2, z)$, with $P_{S0} = |E_{S0}|^2$, and the detected current $i_S(t) = RP_S(t)$, with R being the photoreceiver responsivity. Finally, the SNR of the detected signal will be: $SNR \approx R^2 P_{S0}^2 / \sigma_T^2$, where $\sigma_T$ is the standard deviation of the thermal noise.

In the case of the method of the present invention, the expression of the detected optical field is:

$$E_T(t) = E_{S0}G_{SBS}(v_C + f_{RF}, z)exp(j2\pi(v_C + f_{RF})t + \varphi_2 + \varphi_{SBS}(v_C + f_{RF}, z)) + E_C exp(j2\pi v_C t + \varphi_C),$$

where $E_C$, $\varphi_C$ and $v_C$ are, respectively, the modulus, the phase and the frequency of the optical carrier, and $f_{RF}$ is the modulation frequency of the sideband. It should be noted that the optical frequency of the sideband which acts as a probe optical signal of the Brillouin spectrum generated by the pump is $v_2 = v_C + f_{RF}$. Then, the expression of the optical power detected at that frequency is given by:

$$P_{RF}(t) = 2E_{S0}GS_{BS}(v_C + f_{RF}, z)E_C cos(2\pi f_{RF}t + \varphi_{RF} + \varphi_{SBS}(v_C + f_{RF}, z)).$$

Thus, in the device and method of the invention, it is only necessary that the photoreceiver has a "band-pass" type response centered on the frequency $f_{RF}$ and with a bandwidth around that frequency in the order of $2/\Delta t$. Finally the SNR remains:

$$SNR \approx \frac{2R^2 P_{S0} P_C}{\sigma_T^2},$$

where $P_C = |E_C|^2$ is the carrier power. In the usual case in which the thermal noise is the predominant in the device, this will imply an improvement in SNR with respect to conventional detection in a factor of $P_C/P_{S0}$. This factor can be arbitrarily increased just by increasing the relative amplitude of the carrier sideband as compared with the sideband. Furthermore, for big enough values of $P_C$ it is possible that the predominant noise will be the "shot" type one (corresponding to the electronic noise which happens when the finite number of particles which transport energy, such as electrons in an electronic circuit, or photons in an optical circuit, is small enough for giving rise to statistical fluctuations noticeable in a measurement). In this case $SNR \approx RP_{S0}/2qBW$, that is, the quantum limit is achieved, which determines the maximum sensibility reachable in the measurement. This is achieved even for small $P_S$.

Once the optical signal is detected, an RF signal is obtained, which can be processed for obtaining the Brillouin spectrum measurement. This processing can be made either analogically or digitally. As shown by the expression found for $P_{RF}(t)$, the signal obtained when the detection method described in the present invention is used, contains information both on the amplitude and on the phase of the spectrum for the Brillouin interaction. This information is gathered, in the present invention, by using an RF signal demodulation which allows the recovery of inphase (I) and quadrature (Q) components of this signal and from them, the modulus and phase of the RF signal. Finally, from these last ones, $G_{SBS}$ and $\varphi_{SBS}$ can be directly obtained. In this way the Brillouin gain (or attenuation) spectrum characterization is improved since, apart from measuring the modulus of said spectrum, its phase is also measured, so that the precision in the BFS determination increases.

In order to obtain the complete Brillouin spectrum it is possible to modify the frequency separation between the pump optical signal and the sideband of the probe optical signal used for the interaction. This can be achieved, either by fixing $v_C$ and $v_1$ and modifying $f_{RF}$, or by fixing $v_C$ and $f_{RF}$ and modifying $v_1$.

Alternatively, it is possible to leave frequencies $v_C$, $f_{RF}$ and $v_1$ constant, if the measurement is intended to only characterize the Brillouin spectrum for one single frequency. This is useful for making dynamical measurements in which the BFS variation is only characterized by changes in Brillouin gain and/or phase in a certain frequency component in the Brillouin spectrum. Another non-limitative example of the invention comprises the use, in the diagram of Figure 2, of an optical modulator which provides a phase modulation instead of a single sideband one. Therefore, in the case of the procedure of the present invention, the detected optical field will have three main optical components instead of two, and its mathematical expression will be:

$$E(t) = -E_{S0} \exp(j2\pi(v_C - f_{RF})t) + E_0 \exp(j2\pi v_C t) + E_{S0} \exp(j2\pi(v_C + f_{RF})t)H(v_C + f_{RF}, z).$$

Therefore, the detected optical power at frequency $f_{RF}$ will be:

$$P_{RF}(t) = 2E_0 E_{S0} |H(v_C + f_{RF}, z) - 1| \cos(2\pi f_{RF} t - \arg(H(v_C + f_{RF}, z) - 1))$$

$$\approx \frac{g_{max} E_0 E_{S0}}{\sqrt{1 + \left(2\frac{v_C + f_{RF} - v_1 + BFS(z)}{\Delta v_B}\right)^2}} \cos\left(2\pi f_{RF} t - \arctan\left(2\frac{v_C + f_{RF} - v_1 + BFS(z)}{\Delta v_B}\right)\right),$$

where in the last term of the expression the approximation that Brillouin gain is small is used, which is the usual case for BOTDA sensors. This signal has the important property that its phase-shift does not depend on the gain experimented by the probe optical signal. That is, if this optical signal is detected and a demodulator of any type is used for obtaining the phase-shift of the detected RF signal, the measurement obtained is immune to eventual variations of the attenuation in the fiber or variations in the pump power. This provides important advantages in dynamic measurements as compared with the existing devices, which are based on amplitude measurements (see, for example Bernini, R. et al. Optics Letters 34 (2009) 2613-2615). In these devices, any modification in the probe optical signal gain or in the fiber attenuation is wrongly interpreted as a variation in the strain or the temperature measured in the fiber, giving rise to an error in the measurement. On the contrary, in this example of the invention, this error will not appear or will have a negligible magnitude, since the phase measurement, from which the information on the Brillouin frequency shift at every point of the fiber is derived, will not be affected. In addition, the independence in the phase measurement with respect to the Brillouin gain, and therefore of the pump power, also supposes and advantage over conventional measurements, since it makes the measurements to be less affected by non-local effects, given that they are produced by variations in the pump power.

In short, the present invention introduces new features in the signal detection and processing procedures in a BOTDA type sensor, in such a way that improves the performance of said devices.

DESCRIPTION OF AN EMBODIMENT OF THE INVENTION

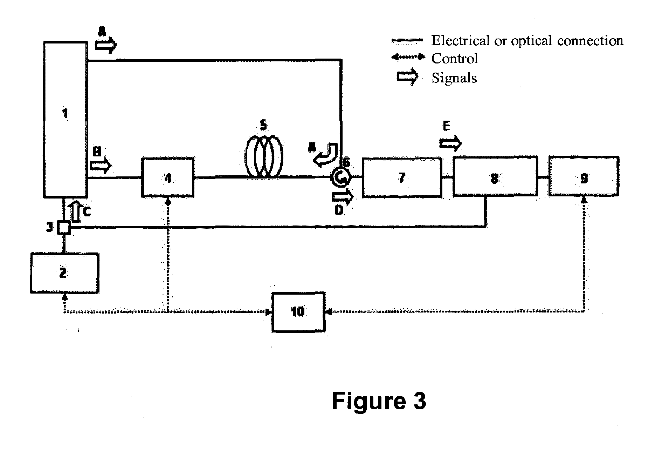

Figure 3 shows an embodiment of the device of the invention which comprises an optical source (1), an RF generator (2), an electrical signal splitter (3), a polarization controller (4), a section of sensing optical fiber (5), a circulator (6), a photoreceiver (7), a demodulator (8), a data capture device (9) and a control device (10).

Regarding the optical source (1) and the optical signals generated by it, the following considerations should be taken into account:

- The optical source (1) generates, at least, two separate optical signals, being one of the signals a pump optical signal (A) and being other of the signals a probe signal (B).
- The pump optical signal (A) preferably consists of pulses of a given optical frequency which can be optionally tuned.
- The probe optical signal (B) consists in, at least, two narrow spectral components. One of the spectral components preferably has a fixed optical frequency, while the other one preferably has an optical frequency separation with respect to the first one, which is determined by the frequency of the electrical signal (C) coming from the RF generator (2). In an optional embodiment of the invention, the probe optical signal (B) consists in three narrow spectral components. One of the spectral components preferably has a fixed optical frequency, while the other ones preferably have an optical frequency separation with respect to the first one, which is determined by the frequency of the electrical signal coming from the RF generator (2).

Regarding the RF generator (2) the following considerations should be taken into account:

- The RF generator (2) is intended to generate an RF electrical signal, preferably sinusoidal.
- The RF generator (2) allows to modify the frequency of the generated electrical signal, in the case where the Brillouin spectrum measurement is chosen to be performed by tuning the optical frequency of, at least, one of the spectral components of the probe signal (B).
- The RF generator (2) provides an electrical signal of fixed frequency, in the case where the Brillouin spectrum measurement is chosen to be performed by tuning the optical frequency of the pump optical signal, or if a specific frequency of the Brillouin spectrum is going to be measured.

Regarding the splitter (3), said element is intended to split the signal provided by the RF generator in, at least, two paths.

Regarding the polarization controller (4), said element is intended to modify the polarization of the probe optical signal, in order to guarantee that efficient Brillouin interaction takes place at every point of the fiber during the measurement.

Regarding the circulator (6), it is firstly intended to route the pump optical signal (A) to the optical fiber (5) under analysis and, on the other hand, to route the signal coming from the optical fiber (5) to the photoreceiver (7).

Regarding the optical fiber (5), the following considerations should be taken into account:

- The optical fiber (5) is where the Brillouin interaction between the pump optical signal (A) and the probe optical signal (B), takes place,
- The optical fiber (5) is preferably of monomode type (that is, that a single light mode propagates through it), in order to guarantee an efficient Brillouin interaction in it.
- The optical fiber (5) preferably has the feature characteristics of the Brillouin spectrum, particularly of the BFS, at every point of thereof, which depend on the physical magnitudes it is subjected to.
- The optical fiber (5) preferably has the feature characteristics of the interaction, which include the BFS dependency coefficients on temperature and strain.
- The optical fiber (5) preferably has its own BFS dependency coefficients on temperature and strain, which are known in advance, in order to use the optical fiber as a sensor element of these physical magnitudes.

Regarding the photoreceiver (7), the following considerations should be taken into account:

- The photoreceiver (7) is intended to detect the output optical signal (D), resulting from the propagation of the signal (B) through the optical fiber (5) where it experiments Brillouin interaction with the pump optical signal (A).

- The photoreceiver (7) preferably has enough bandwidth for detecting the optical power of the signal generated as a result of the beat of the spectral components contained in the probe optical signal (B). This bandwidth is, in general, greater than the frequency of the electrical signal produced by the RF generator (2).

Regarding the demodulator (8), it is intended to obtain the inphase and quadrature components of the RF signal detected in the photoreceiver in order to find, from them, the modulus and phase of said RF signal.

Regarding the data capture device (9), it is intended to obtain the measurement data and act as an interface with the control device (10).

Regarding the control device (10), it is intended to synchronize, the operation of the measuring device acting on the optical source (1), on the polarization controller (4) and the RF generator (2), by means of a combination of programmable hardware and/or software, as well as processing the measurement data captured in the data capture device (9) for obtaining the BFS measurement and, eventually, the physical magnitudes at every point of the optical fiber (5).

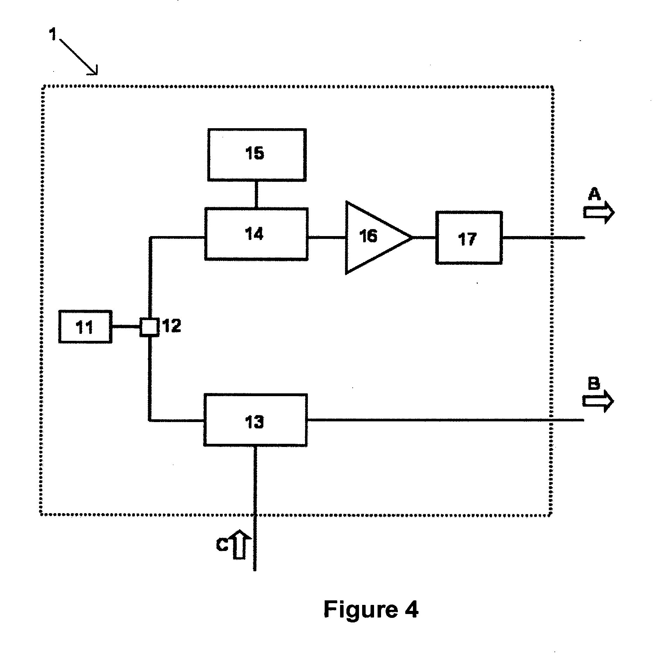

Figure 4 shows the optical source (1) used in a preferred embodiment of the present invention, which comprises, preferably, a narrowband optical source (11), preferably a laser source, an optical signal splitter (12), an optical single sideband modulator (13), an optical double sideband modulator with suppressed carrier (14), an RF pulse generator (15), an optical amplifier (16) and an optical filter (17).

Regarding the narrowband optical source (11) and the optical signal generated by it, the following considerations should be taken into account:

- The optical signal generated by the narrowband optical source (11) preferably has a spectral width narrow enough for guaranteeing the efficiency of the SBS effect on the fiber.
- The optical signal generated by the narrowband optical source (11) preferably has a fixed wavelength.

Regarding the splitter (12), it is intended to split the narrowband optical source signal (11) in at least, two paths.

Regarding the optical single sideband modulator (13), the following considerations should be taken into account:

- the optical single sideband modulator (13) is intended to modulate in single sideband the optical carrier generated by the optical source (11) for providing a probe optical signal (B) which comprises two narrow spectral components: the carrier and the modulation sideband.
- In the optical single sideband modulator (13) the modulating signal preferably is the electrical signal (C) of the RF generator (2).
- In the optical single sideband modulator (13), the power of the modulating signal (C) determines the modulation index of the optical carrier, and therefore, the amplitude ratio between the carrier and the modulation sideband.

Alternatively, it is also possible, in other embodiment, to substitute the optical single sideband modulator (13) for an optical phase modulator. In this case, regarding the optical phase modulator, the following considerations should be taken into account:

- The optical phase modulator is intended to modulate the optical carrier phase generated by the optical source (11) for providing a probe optical signal (B) which comprises three narrow spectral components: the carrier and two modulation sidebands.
- In the optical phase modulator, the modulating signal used preferably is the electrical signal (C) of the RF generator (2).
- In the optical phase modulator, the modulating signal (C) power determines the modulation index of the optical carrier and therefore, the amplitude ratio between the carrier and the modulation sidebands.

Regarding the RF pulse generator (15), the following considerations should be taken into account:

- The generator (15) generates pulses of an electrical signal, preferably sinusoidal and of a given frequency.
- Th generator (15) allows varying, during the measurement, the frequency of the pulsed sinusoidal signal which is generated by it, in the case where the Brillouin spectrum measurement is chosen to be performed by varying the optical frequency of the pump optical signal (A).
- The generator (15) keeps the pulsed sinusoidal signal frequency, which is generated by it, fixed, in the case where the Brillouin spectrum measurement is chosen to be performed by tuning the optical frequency of one of the spectral components of the probe signal, or if only a particular frequency in the Brillouin spectrum is going to be measured.

Regarding the optical double sideband modulator with suppressed carrier (14), the following considerations should be taken into account:

- The optical double sideband modulator with suppressed carrier (14) is intended to generate two modulation sidebands of the optical carrier generated by the source (11).
- The signal applied to the optical double sideband modulator with suppressed carrier (14) is preferably generated by the generator (15).
- The operation of the optical double sideband modulator with suppressed carrier (14) is adjusted to generate an optical double sideband modulation with suppressed carrier.

Regarding the optical amplifier (16), it is intended to increase, if necessary, the power of the optical signals generated by the optical double sideband modulator with suppressed carrier (14), in order to increase the magnitude of the Brillouin interaction in the optical fiber (5).

Regarding the filter (17), it is intended to filter, if necessary, the optical noise or other unwanted components of the optical spectrum, preferably at the output of the optical amplifier (16).

The BFS measurement method in the optical fiber (5) using the present embodiment of the invention includes the following steps:

i. Adjusting, if necessary, the optical frequency of the pump optical signal (A). In the case in which the embodiment of the optical source (1) used is based in the abovementioned narrowband optical source (11), the optical frequency of the pulsed pump signal is adjusted by adjusting the RF pulse generator (15) frequency.

ii. Adjusting if necessary, the generator frequency (2) for thus adjusting the frequency separation between the two spectral components of the probe optical signal (B). If the alternative of a probe signal (B) with three main spectral components is used, the frequency of the generator would serve for adjusting the frequency separation between these three components.

iii. Adjusting the polarization of the light in the polarization controller (4), for guaranteeing that efficient Brillouin interaction takes place at every point of the fiber during the measurement.

iv. The pump optical signal (A) is introduced from one end (entry end) of the optical fiber (5) to be measured.

v. The probe optical signal (B) is introduced from the other end of the optical fiber (5).

vi. Producing Brillouin interaction between the spectral components of the pump optical signal (A) and the probe optical signal (B) in the optical fiber (5) which produces an output optical signal (D).

vii. Separating the pump optical signal (A) and the output optical signal (D) by means of a circulator (6) located at the entry end of the signal (A) in the optical fiber segment (5).

viii. Detecting the output optical signal (D) by means of a photoreceiver (7) with enough bandwidth as to detect the beat between the spectral components present at the optical signal (D). In the case in which the embodiment of the optical source (1) used is based in the abovementioned narrowband optical source (11), the spectral components are the carrier and the sideband resulting from the modulation in the modulator (13). In the case of an embodiment of the optical source (1) in which a phase modulator is used, the main spectral components are the carrier and the two modulation sidebands.

ix. Demodulating the RF signal (E) resulting from the output of the photoreceiver (7) at the demodulator (8).

x. Obtaining, at the demodulator (8), the components necessary for measuring the modulus and/or phase of the RF signal (E), present at its entry and coming from the photoreceiver (7).

xi. Recording data in the device (9) and sending them to the control device (10).

xii. If a further characterization of the Brillouin spectrum is desired, steps (i) to (xi) are repeated for a new adjustment of the frequencies of the pump optical signal (A) and/or the RF generator (2) until the completion of the measurement of the Brillouin interaction spectrum in the optical fiber (5) in the desired frequency range.

xiii. Processing measurement data at the control device (10) for obtaining the distributed BFS measurement throughout the fiber and, eventually, of the physical parameters of temperature and/or strain.

Lastly, after having described the device and method of the present invention, as well as some of their embodiments, and having described their main advantages over the prior art, it should be noted that its application should not be regarded as limitative of other embodiments consisting in variations of the elements thereof, as long as said variations fall within the scope of the appended claims.

## Claims

1. Device for measurement of the distribution of physical magnitudes in an optical fiber (5) which comprises, at least:

- an optical source (1) configured for generating at least one pulsed pump optical signal (A) and, at least, a probe optical signal (B) which comprises at least two spectral components and said spectral components being separated in optical frequency;
- a section of optical fiber (5) where the probe optical signal (B) interacts with the pump optical signal (A);

**Characterized in that** said device further comprises:

- a photoreceiver (7) configured to detect the output optical signal (D) and to provide an RF signal (E), resulting from the beat between the spectral components contained in said output optical signal (D) exiting from the fiber;
- a demodulator (8) configured to demodulate the RF electrical signal (E) exiting from the receiver.

2. Device according to claim 1, wherein the demodulator (8) is a synchronous demodulator.

3. Device according to any of claims 1 and 2, wherein the demodulator (8) comprises at least one detector, selected from an envelope detector, and/or a phase modulation detector, and/or a frequency modulation detector; and/or the device further comprises at least one phase-locked loop.

4. Device according to any of claims 1 to 3, wherein the probe optical signal (B) generated in the optical source (1) comprises three spectral components.

5. Device according to any of claims 1 to 4, wherein the optical source (1) comprises at least one narrowband optical source (11), at least one optical signal splitter (12), at least one optical modulator (13, 14) and at least one RF pulse generator (15).

6. Device according to claim 5, wherein the narrowband optical source (11) comprises a laser source and/or wherein said device further comprises at least one optical single sideband modulator (13), and/or at least one optical phase modulator, and/or at least one optical double sideband modulator with suppressed carrier (14).

7. Device according to any of claims 1-6, wherein the optical source (1) comprises an optical amplifier (16) configured for increasing the optical power of the generated pump optical signal (A).

8. Device according to any of claims 1-7, wherein the optical source (1) comprises an optical filter (17) configured to remove optical noise and/or undesired optical components of the optical spectrum.

9. Device according to any of claims 1-8 which comprises one data capture device (9) configured to obtain physical magnitudes distribution data in the optical fiber (5).

10. Device according to claim 9 which comprises a control device (10) provided with a programmable software and/or hardware combination, said device being synchronized to measure physical magnitudes in the optical fiber (5), acting on the optical source (1), the polarization controller (4) and the RF generator (2), and/or to process measurement data in the data capture device (9) for obtaining the BFS measurement and/or the physical magnitudes in the optical fiber (5).

11. Method for measurement of the distribution of physical magnitudes in an optical fiber (5) comprising:

i. Introducing a pulsed pump optical signal (A) from one end of one optical fiber (5) segment;
ii. Introducing a probe optical signal (B) from the other end of the optical fiber (5) segment, said probe optical signal (B) comprising at least two spectral components and said spectral components being separated in optical frequency;
iii. Interaction in the optical fiber (5), by means of stimulated Brillouin scattering, of the pulsed pump optical signal (A) with at least one of the spectral components of the probe optical signal (B) for generating an output optical signal (D) which contains said components;
iv. Detecting in a photoreceiver (7) the output optical signal (D) to provide a radiofrequency signal (E), resulting from the beat between the spectral components of the output optical signal (D);
v. Demodulating the radiofrequency signal (E) for obtaining the modulus and/or phase of the signal at the frequency given by the difference in optical frequency of the spectral components of the output optical signal (D);
vi. Processing the signal resulting from demodulating the radio frequency signal (E) for obtaining the distribution of the modulus and/or phase of the Brillouin interaction spectrum throughout the optical fiber (5), at an optical frequency determined by the optical frequency of the pulsed pump optical signal (A) and the frequency of one of the spectral components of the probe optical signal (B).

**12.** Method according to claim 11, wherein the demodulation of the radiofrequency signal (E) of step (v) is a synchronous demodulation and/or comprises the demodulation with envelope detection of the radiofrequency signal (E), and/or comprises the demodulation with phase detection of the radiofrequency signal (E), and/or comprises the demodulation with frequency detection of the radiofrequency signal (E), and/or the method further comprises the use of a phase locked loop.

**13.** Method according to any of claims 11-12, wherein in step, (ii) or in step (iv) a probe optical signal (B) consisting in three optical components with a given optical frequency difference is used.

**14.** Method according to any of claims 11-13, wherein steps, (i) to (vi) are repeated for different optical frequency adjustments of the pulsed pump optical signal (A) and/or one or more of the probe optical signal components (B), in order to obtain the distribution throughout the optical fiber (5) of the modulus and/or phase of the Brillouin interaction at different optical frequencies.

**15.** Method according to any of claims 11-14, wherein one or more of steps (i) to (vi) is performed using a device according to claims 1 to 10.


**Patentansprüche**

**1.** Vorrichtung zur Messung der Verteilung physikalischer Größen in einer optischen Faser (5), die mindestens Folgendes umfasst:

- eine optische Quelle (1), die zur Erzeugung mindestens eines gepulsten optischen Pumpsignals (A) und mindestens eines optischen Sondensignals (B), das mindestens zwei spektrale Komponenten umfasst, gestaltet ist, wobei besagte spektrale Komponenten in optischer Frequenz voneinander getrennt sind;
- einen Abschnitt der optischen Faser (5), in dem das optische Sondensignal (B) mit dem optischen Pumpsignal (A) wechselwirkt; **dadurch gekennzeichnet, dass** die besagte Vorrichtung weiterhin

Folgendes umfasst:

- einen Photoempfänger (7), der zur Detektion des optischen Ausgangssignals (D) und zur Bereitstellung eines RF-Signals (E) ausgestaltet ist, das sich aus der Schwebung zwischen den spektralen Komponenten ergibt, die im besagten, aus der Faser austretenden optischen Ausgangssignal (D) enthalten sind;
- einen Demodulator (8), der zur Demodulation des aus dem Empfänger austretenden elektrischen RF-Signals (E) ausgestaltet ist.

**2.** Vorrichtung nach Anspruch 1, wobei der Demodulator (8) ein synchroner Demodulator ist.

**3.** Vorrichtung nach einem der Ansprüche 1 und 2, wobei der Demodulator (8) mindestens einen Detektor umfasst, der ausgewählt wird aus einem Hüllendetektor und/oder einem Phasemodulationsdetektor und/oder einem Frequenzmodulationsdetektor; und/oder wobei die Vorrichtung weiterhin mindestens einen Phasenregelkreis umfasst.

**4.** Vorrichtung nach einem der Ansprüche 1 bis 3, wobei das in der optischen Quelle (1) erzeugte optische Sondensignal (B) drei spektrale Komponenten umfasst.

**5.** Vorrichtung nach einem der Ansprüche 1 bis 4, wobei die optische Quelle (1) mindestens eine optische Schmalbandquelle (11), mindestens einen optischen Signalsplitter (12), mindestens einen optischen Modulator (13, 14) und mindestens einen RF-Pulsgenerator (15) umfasst.

**6.** Verfahren nach Anspruch 5, wobei die optische Schmalbandquelle (11) eine Laserquelle umfasst und/oder wobei die besagte Vorrichtung weiterhin mindestens einen optischen Einseitenbandmodulator (13) und/oder mindestens einen optischen Phasenmodulator und/oder mindestens einen optischen Zweiseitenbandmodulator mit unterdrücktem Träger (14) umfasst.

**7.** Vorrichtung nach einem der Ansprüche 1 bis 6, wobei die optische Quelle (1) einen optischen Verstärker (16) umfasst, der zur Erhöhung der optischen Leistung des erzeugten optischen Pumpsignals (A) ausgestaltet ist.

**8.** Vorrichtung nach einem der Ansprüche 1 bis 7, wobei die optische Quelle (1) einen optischen Filter (17) umfasst, der zur Beseitigung des optischen Rauschens und/oder unerwünschter optischer Komponenten des optischen Spektrums ausgestaltet ist.

**9.** Vorrichtung nach einem der Ansprüche 1 bis 8, die eine Datenerfassungsvorrichtung (9) umfasst, die zum Erhalt von Verteilungsdaten physikalischer Größen in der optischen Faser (5) ausgestaltet ist.

**10.** Vorrichtung nach Anspruch 9, die eine Kontrollvorrichtung (10) umfasst, die mit einer programmierbaren Software- und/oder Hardware-Kombination versehen ist, wobei besagte Vorrichtung zur Messung physikalischer Größen in der optischen Faser (5), die auf die optische Quelle (1), den Polarisationskontroller (4) und den RF-Generator (2) wirken, und/oder zur Verarbeitung der Messdaten in der Datenerfassungsvorrichtung (9) synchronisiert ist, um die Messung der Brillouin-Frequenzverschiebung und/oder die physikalischen Größen in der optischen Faser (5) zu erhalten.

**11.** Verfahren zur Messung der Verteilung physikalischer Größen in einer optischen Faser (5), das Folgendes umfasst:

i. Einleiten eines gepulsten optischen Pumpsignals (A) von einem Ende eines Abschnitts der optischen Faser (5);
ii. Einleiten eines optischen Sondensignals (B) vom anderen Ende des Abschnitts der optischen Faser (5), wobei das besagte optische Sondensignal (B) mindestens zwei spektrale Komponenten umfasst und besagte spektrale Komponenten in optischer Frequenz voneinander getrennt sind;
iii. Interaktion in der optischen Faser (5), mittels stimulierter Brillouin-Streuung, des gepulsten optischen Pumpsignals (A) mit mindestens einer der spektralen Komponenten des optischen Sondensignals (B) zur Erzeugung eines optischen Ausgangssignals (D), das besagte Komponenten enthält;
iv. Detektion des optischen Ausgangssignals (D) in einem Photoempfänger (7) zum Bereitstellen eines Radiofrequenz-Signals (E), das sich aus der Schwebung zwischen den spektralen Komponenten des optischen Ausgangssignals (D) ergibt;
v. Demodulation des Radiofrequenz-Signals (E) zum Erhalt des Moduls und/oder der Phase des Signals bei der Frequenz, die durch die Differenz der optischen Frequenzen der spektralen Komponenten des optischen Ausgangssignals (D) gegebenen ist;
vi. Verarbeitung des Signals, das sich aus der Demodulation des Radiofrequenz-Signals (E) ergibt, um die Verteilung des Moduls und/oder der Phase des Brillouin-Interaktionsspektrums über die optische Faser (5) bei einer optischen Frequenz, die durch die optische Frequenz des gepulsten optischen Pumpsignals (A) und die Frequenz einer der spektralen Komponenten des optischen Sondensignals (B) bestimmt wird, zu erhalten.

**12.** Verfahren nach Anspruch 11, wobei die Demodulation des Radiofrequenz-Signals (E) aus Schritt (v) eine synchrone Demodulation ist und/oder die Demodulation mit Hüllendetektion des Radiofrequenz-Signals (E) umfasst und/oder die Demodulation mit Phasendetektion des Radiofrequenz-Signals (E) umfasst und/oder die Demodulation mit Frequenzdetektion des Radiofrequenz-Signals (E) umfasst und/oder wobei das Verfahren weiterhin die Verwendung eines Phasenregelkreises umfasst.

**13.** Verfahren nach einem der Ansprüche 11 bis 12, wobei in Schritt (ii) oder in Schritt (iv) ein optisches Sondensignal (B) bestehend aus drei optischen Komponenten mit einem gegebenen optischen Frequenzunterschied verwendet wird.

**14.** Verfahren nach einem der Ansprüche 11 bis 13, wobei die Schritte (i) bis (vi) für unterschiedliche optische Frequenzeinstellungen des gepulsten optischen Pumpsignals (A) und/oder für eine oder mehrere Komponenten des optischen Sondensignals (B) wiederholt werden, um die Verteilung über die optische Faser (5) des Moduls und/oder der Phase der Brillouin-Interaktion bei unterschiedlichen optischen Frequenzen zu erhalten.

**15.** Verfahren nach einem der Ansprüche 11 bis 14, wobei ein oder mehrere Schritte (i) bis (vi) unter Verwendung einer Vorrichtung nach den Ansprüchen 1 bis 10 durchgeführt werden.

**Revendications**

**1.** Dispositif de mesure de la distribution de grandeurs physiques dans une fibre optique (5) qui comprend, au moins :

- une source optique (1) configurée pour générer au moins un signal optique de pompage à impulsion (A) et, au moins, un signal optique de sonde (B) qui comprend au moins deux éléments du spectre et lesdits éléments du spectre étant séparés en fréquence optique ;
- une section de fibre optique (5) où le signal optique de sonde (B) interagit avec le signal optique de pompage (A) ;

**caractérisé en ce que** ledit dispositif comprend en outre :

- un photorécepteur (7) configuré pour détecter le signal optique de sortie (D) et pour fournir un signal RF (E), résultant du battement entre les éléments du spectre contenus dans ledit signal optique de sortie (D) sortant de la fibre ;
- un démodulateur (8) configuré pour démoduler le signal électrique RF (E) sortant du récepteur.

2. Dispositif selon la revendication 1, dans lequel le démodulateur (8) et un démodulateur synchrone.

3. Dispositif selon n'importe laquelle des revendications 1 et 2, dans lequel le démodulateur (8) comprend au moins un détecteur, sélectionné parmi un détecteur d'enveloppe, et/ou un détecteur de modulation de phase, et/ou un détecteur de modulation de fréquence, et/ou le dispositif comprend en outre au moins une boucle à verrouillage de phase.

4. Dispositif selon n'importe laquelle des revendications 1 à 3, dans lequel le signal optique de sonde (B) généré dans la source optique (1) comprend trois éléments du spectre.

5. Dispositif selon n'importe laquelle des revendications 1 à 4, dans lequel la source optique (1) comprend au moins une source optique à bande étroite (11), au moins un répartiteur de signal optique (12), au moins un modulateur optique (13, 14) et au moins un générateur d'impulsion RF (15).

6. Dispositif selon la revendication 5, dans lequel la source optique à bande étroite (11) comprend une source laser et/ou dans lequel ledit dispositif comprend en outre au moins un modulateur optique à bande latérale unique (13), et/ou au moins un modulateur de phase optique, et/ou au moins un modulateur optique à double bande latérale avec porteuse supprimée (14).

7. Dispositif selon n'importe laquelle des revendications 1-6, dans lequel la source optique (1) comprend un amplificateur optique (16) configuré pour accroître la puissance optique du signal optique de pompage (A) généré.

8. Dispositif selon n'importe laquelle des revendications 1-7, dans lequel la source optique (1) comprend un filtre optique (17) configuré pour éliminer le bruit optique et/ou les éléments optiques indésirables du spectre optique.

9. Dispositif selon n'importe laquelle des revendications 1-8 qui comprend un dispositif de capture de données (9) configuré pour obtenir des données de distribution de grandeurs physiques dans la fibre optique (5).

10. Dispositif selon la revendication 9 qui comprend un dispositif de contrôle (10) équipé d'un logiciel programmable et/ou d'une combinaison matérielle, ledit dispositif étant synchronisé pour mesurer des grandeurs physiques dans la fibre optique (5), agissant sur la source optique (1), le contrôleur de polarisation (4) et le générateur RF (2), et/ou pour traiter des données de mesure dans le dispositif de capture de données (9) pour obtenir la mesure BFS et/ou les grandeurs physiques dans la fibre optique (5).

11. Procédé pour mesurer la distribution de grandeurs physiques dans une fibre optique (5) consistant à :

i. Introduire un signal optique de pompage à impulsion (A) d'une extrémité d'un segment de fibre optique (5) ;
ii. Introduire un signal optique de sonde (B) de l'autre extrémité du segment de fibre optique (5), ledit signal optique de sonde (B) comprenant au moins deux éléments du spectre et lesdits éléments du spectre étant séparés en fréquence optique ;
iii. Interagir dans la fibre optique (5), par diffusion de brillouin stimulée, du signal optique de pompage à impulsion (A) avec au moins l'un des éléments du spectre du signal optique de sonde (B) pour générer un signal optique de sortie (D) qui contient lesdits éléments ;
iv. Détecter dans un photorécepteur (7) le signal optique de sortie (D) pour fournir un signal de radiofréquence (E), résultant du battement entre les éléments du spectre du signal optique de sortie (D) ;
v. Démoduler le signal de radiofréquence (E) pour obtenir le module et/ou la phase du signal à la fréquence donnée par la différence dans la fréquence optique des éléments du spectre du signal optique de sortie (D);

vi. Traiter le signal résultant de la démodulation du signal de radiofréquence (E) pour obtenir la distribution du module et/ou de la phase du spectre d'interaction Brillouin dans toute la fibre optique (5), à une fréquence optique déterminée par la fréquence optique du signal optique de pompage à impulsion (A) et la fréquence de l'un des éléments du spectre du signal optique de sonde (B).

12. Procédé selon la revendication 11, dans lequel la démodulation du signal de radiofréquence (E) de l'étape (v) est une démodulation synchrone et/ou comprend la démodulation avec détection d'enveloppe du signal de radiofréquence (E), et/ou comprend la démodulation avec détection de phase du signal de radiofréquence (E), et/ou comprend la démodulation avec détection de fréquence du signal de radiofréquence (E), et/ou le procédé comprend en outre l'utilisation d'une boucle à verrouillage de phase.

13. Procédé selon n'importe laquelle des revendications 11-12, dans lequel, dans l'étape (ii), ou dans l'étape (iv), on utilise un signal optique de sonde (B) consistant en trois éléments optiques avec une différence de fréquence optique donnée.

14. Procédé selon n'importe laquelle des revendications 11-13, dans lequel les étapes (i) à (vi) sont répétées pour différents réglages de fréquence optique du signal optique de pompage à impulsion (A) et/ou un ou plusieurs des éléments du signal optique de sonde (B), afin d'obtenir la distribution dans toute la fibre optique (5) du module et/ou de la phase de l'interaction Brillouin à différentes fréquences optiques.

15. Procédé selon n'importe laquelle des revendications 11-14, dans lequel une ou plusieurs des étapes (i) à (vi) sont réalisées en utilisant un dispositif selon les revendications 1 à 10.

**Figure 1**

**Figure 2**

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- ES 2226001
- US 4997277 A
- US 7245790 B2
- US 7719666 B2
- US 7227123 B2
- US 7480460 B2
- EP 2246685 A1

### Non-patent literature cited in the description

- **Y.D. GONG.** *Optics Communications,* 2007, vol. 272, 227-237
- **BERNINI, R. et al.** *Optics Letters,* 2009, vol. 34, 2613-2615